# EUROPEAN PATENT APPLICATION

(11) **EP 4 826 518 A1**
(43) Date of publication of application: **21.10.2026**
(21) Application number: 25211154.7
(22) Date of filing: 24.10.2025
(51) Int. Cl.: G06F 3/16, G06F 3/01

(54) **METHOD, APPARATUS, DEVICE AND STORAGE MEDIUM FOR INTERACTION**

(30) Priority: 18.04.2025 CN 202510495945
(71) Applicant: Beijing Zitiao Network Technology Co., Ltd., Beijing 100190 (CN)
(72) Inventor: CAI, Wei, Beijing, 100028 (CN); DING, Xiaopeng, Beijing, 100028 (CN); QIAO, Wende, Beijing, 100028 (CN); SHI, Jian, Beijing, 100028 (CN); WANG, Lei, Beijing, 100028 (CN)
(74) Representative: Marks & Clerk LLP

(57) **Abstract**

Embodiments of the disclosure relate to a method, an apparatus, a device, and a storage medium for interaction. The method proposed herein is applied at an electronic device, the method including: continuously capturing, using an image acquisition unit equipped on the electronic device, a plurality of images during the electronic device is in a first mode; and outputting, in response to a visual interaction request of a user, response content to the user, wherein the response content is generated by a pre-trained model based on at least one image of the plurality of images. In this way, the embodiments of the disclosure are able to meet the needs of the user to interact using the electronic device.

## Description

### FIELD

Example embodiments of the present disclosure generally relate to the field of computers, and in particular, to a method, an apparatus, a device, and a computer-readable storage medium for interaction.

### BACKGROUND

With the increasing maturity of science and technology, the use of electronic devices has gradually become a daily habit of people. For example, a user may use an electronic device to play audio content, check time, measure physiological data, and so on. In addition, people may also use electronic devices to perform interaction operations. However, the interaction operations supported by existing electronic devices only include some simple interaction operations, such as playing audio and switching audio, which cannot meet users' deeper interaction needs.

### SUMMARY

In a first aspect of the present disclosure, a method of interaction is provided. The method is applied at (e.g. performed at or by) an electronic device. The method includes: continuously capturing, using an image acquisition unit equipped on the electronic device, a plurality of images during the electronic device is in a first mode; and outputting, in response to a visual interaction request of a user, response content to the user, wherein the response content is generated by a pre-trained model based on at least one image of the plurality of images.

In a second aspect of the present disclosure, a method of interaction is provided. The method is applied at a terminal device. The method includes: obtaining, from an electronic device in wireless communication with the terminal device, a plurality of images, wherein the plurality of images are continuously captured using an image acquisition unit equipped on the electronic device during the electronic device is in a first mode; obtaining, in response to a visual interaction request of a user, response content, wherein the response content is generated by a pre-trained model based on at least one of the plurality of images; and sending, to the electronic device, the response content to output, using the electronic device, the response content to the user.

In a third aspect of the present disclosure, a method of interaction is provided. The method is applied at an interaction system. The interaction system includes an electronic device and a terminal device in wireless communication. The method includes: continuously capturing, using an image acquisition unit equipped on the electronic device, a plurality of images during the electronic device is in a first mode; sending, by the electronic device, the plurality of images to the terminal device; obtaining, by the terminal device and in response to a visual interaction request of a user, response content, wherein the response content is generated by a pre-trained model based on at least one image of the plurality of images; and sending, by the terminal device and to the electronic device, the response content to output, using the electronic device, the response content to the user.

In a fourth aspect of the present disclosure, an apparatus for interaction is provided. The apparatus is applied to an electronic device. The apparatus includes: an image acquisition module configured to continuously capture, using an image acquisition unit equipped on the electronic device, a plurality of images during the electronic device is in a first mode; and a playing module configured to output, in response to a visual interaction request of a user, response content to the user, wherein the response content is generated by a pre-trained model based on at least one of the plurality of images.

In a fifth aspect of the present disclosure, an apparatus for interaction is provided. The apparatus is applied to a terminal device. The apparatus includes: an image obtaining module configured to obtain, from an electronic device in wireless communication with the terminal device, a plurality of images, wherein the plurality of images is continuously captured using an image acquisition unit equipped on the electronic device during the electronic device is in a first mode; a second receiving module configured to obtain, in response to a visual interaction request of a user, response content, wherein the response content is generated by a pre-trained model based on at least one image of the plurality of images; and a sending module configured to send, to the electronic device, the response content to output, using the electronic device, the response content to the user.

In a sixth aspect of the present disclosure, an apparatus for interaction is provided. The apparatus is applied at an interaction system. The interaction system includes an electronic device and a terminal device in wireless communication. The apparatus includes: an image acquisition module configured to continuously capture, using an image acquisition unit equipped on the electronic device, a plurality of images during the electronic device is in a first mode; an image sending module configured to send, by the electronic device, the plurality of images to the terminal device;

a speech obtaining module configured to obtain, by the terminal device and in response to a visual interaction request of a user, response content, wherein the response content is generated by a pre-trained model based on at least one of the plurality of images; and a speech playing module configured to send, by the terminal device and to the electronic device, the response content to output, using the electronic device, the response content to the user.

In a seventh aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect, the second aspect, or the third aspect.

In an eighth aspect of the present disclosure, a computer-readable storage medium is provided. The computer-readable storage medium stores a computer program. The computer program when executed by a processor, implements the method of the first aspect, the second aspect, or the third aspect.

It should be understood that the content described in this Summary is not intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
Fig. 1 illustrates a schematic diagram of an example interaction system in which the embodiments according to the present disclosure may be implemented;
Fig. 2 illustrates a flowchart of an example process for speech interaction according to some embodiments of the present disclosure;
FIGS. 3A and 3B illustrate example interfaces according to some embodiments of the present disclosure;
Fig. 4 illustrates a flowchart of an example process of interaction according to some embodiments of the present disclosure;
Fig. 5 illustrates a flowchart of an example process of interaction according to some other embodiments of the present disclosure;
Fig. 6 illustrates a flowchart of an example process of interaction according to some other embodiments of the present disclosure;
Fig. 7 illustrates a schematic structural block diagram of an example apparatus for interaction according to some embodiments of the present disclosure;
Fig. 8 illustrates a schematic structural block diagram of an example apparatus for interaction according to some other embodiments of the present disclosure;
Fig. 9 illustrates a schematic structural block diagram of an example apparatus for interaction according to some other embodiments of the present disclosure; and
Fig. 10 illustrates a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be interpreted as being limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the headings of any section/sub-section provided herein are not restrictive. Various embodiments are described throughout this article, and any type of embodiment may be included under any section/sub-section. In addition, the embodiments described in any section/sub-section may be combined with any other embodiments described in the same section/sub-section and/or different section/sub-section in any way.

In the description of the embodiments of the present disclosure, the term "include/comprise", and similar terms thereof should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve data of a user, acquisition and/or use of data, and so on. These aspects all comply with corresponding laws, regulations and related provisions. In the embodiments of the present disclosure, all collection, acquisition, processing, machining, forwarding, use, etc. of data are carried out on the premise that the user knows and confirms. Accordingly, when implementing the embodiments of the present disclosure, the user should be informed of the type, scope of use, use scenarios, etc., of possible involved data or information in an appropriate manner according to relevant laws and regulations, and the authorization of the user should be obtained. The specific manner of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary for the performance of a contract, etc.), and the processing will only be carried out within the scope of provisions or agreements. If the user refuses to process personal information other than the necessary information required for the basic functions, it will not affect the user's use of the basic functions.

As mentioned above, with the increasing maturity of science and technology, the use of electronic devices has gradually become a daily habit of people. For example, a user may use an electronic device to play audio content, check time, measure physiological data, and so on. In addition, people may also use electronic devices to perform interaction operations. However, the interaction operations supported by existing electronic devices only include some simple interaction operations, such as playing audio and switching audio, which cannot meet users' deeper interaction needs.

The embodiments of the present disclosure provide a solution for speech interaction applied at an electronic device. According to the solution, an image acquisition unit equipped on the electronic device may be used to continuously capture a plurality of images during the electronic device is in a first mode; and in response to a visual interaction request of a user, response content may be output to the user, wherein the response content is generated by a pre-trained model based on at least one of the plurality of images.

In this way, the embodiments of the present disclosure are able to continuously capture a plurality of images using the image acquisition unit equipped on the electronic device during the electronic device is in the first mode. In addition, the embodiments of the present disclosure are able to obtain and output, using the electronic device, response speech content generated by the model based on the plurality of images, after the electronic device receives the visual interaction request of the user. In this way, the electronic device provided by the embodiments of the present disclosure is able to generate and output corresponding response content for image content and a visual interaction request, thereby improving the efficiency of the user in obtaining information, expanding the interaction capability between the electronic device and the user, and satisfying the interaction needs of the user. In addition, since the electronic device provided in the embodiments of the present disclosure continuously captures images, instead of starting to capture images after obtaining the speech content of the user, the efficiency of processing the speech content may be improved, and the waiting time of the user may be reduced.

Various example implementations of the solution are described in detail below in further combination with the drawings.

### EXAMPLE INTERACTION SYSTEM

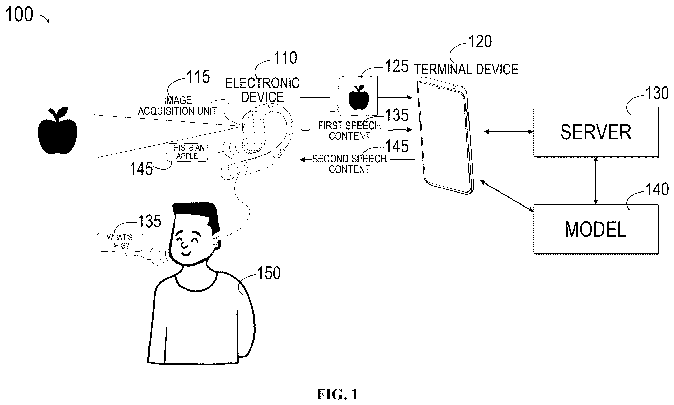

Fig. 1 illustrates a schematic diagram of an example interaction system 100 of the embodiments of the present disclosure. As shown in Fig. 1, the interaction system 100 may include an electronic device 110 and a terminal device 120. A communication connection may be established between the electronic device 110 and the terminal device 120. As an example, the electronic device 110 may be connected to the terminal device 120 based on an appropriate wireless connection method; alternatively, the electronic device 110, for example, may also establish a wired connection with the terminal device 120. For example, the communication connection may include, but is not limited to, a Bluetooth connection, a mobile network connection, a Universal Serial Bus (USB) connection, a Wireless Fidelity (Wi-Fi) connection, etc., and the embodiments of the present disclosure are not limited in this regard.

As shown in Fig. 1, the electronic device 110 may be equipped with one or more image acquisition units 115. For example, the image acquisition unit 115 may be implemented as a camera assembly (e.g., a camera).

As an example, the electronic device 110 may include, for example, a wearable device or other devices (for example, a handheld device, etc.). For example, the wearable device may include a headphone device in an appropriate form, such as an in-ear headphone, a behind-the-ear headphone, an over-ear headphone, and the like. The present disclosure is not intended to limit the form of the headphone device.

Additionally, the headphone device may be equipped with an image acquisition unit 115 (e.g., a camera) set at an appropriate position to support capturing images of the surroundings of the user 150 with the camera during the user 150 wears the headphone device.

In some examples, the headphone device, for example, may be equipped with a single camera or a plurality of cameras. For example, the left-ear headphone and the right-ear headphone may each be equipped with one camera. As another example, the headphone device may be equipped with only a single camera, for example. For example, only the right-ear headphone is equipped with a camera, and the left-ear headphone may not be equipped with a camera.

In some other examples, the electronic device 110 may also be implemented in other appropriate forms. For example, the electronic device 110 may include a glasses device equipped with one or more cameras. For example, such a camera may be set at a frame or a temple of the glasses device.

In some embodiments, the electronic device 110 may be provided with an audio acquisition unit (e.g., a microphone) and an audio playing unit (e.g., a speaker). Specifically, the electronic device 110 may use the audio acquisition unit to capture audio data, and may send the audio data to the terminal device 120. Alternatively, the electronic device 110 may also use the audio playing unit to play audio data from the terminal device 120.

In some embodiments, the electronic device 110 may also be associated with a voice assistant application installed in the terminal device 120. For example, the user 150 may use the electronic device 110 to perform voice interaction with the voice assistant application. Additionally, as will be described below, the terminal device 120 may also provide a graphical interface of the voice assistant application to provide visual interactive information associated with the voice assistant application.

In some embodiments, the terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a Personal Digital Assistant (PDA), an audio/video player, a digital camera/video camera, a positioning device, a television receiver, a radio broadcast receiver, an e-book device, a game device, or any combination of the above, including the accessories and peripherals of these devices, or any combination thereof. In some embodiments, the terminal device 120 may also support any type of interface for the user (such as a "wearable" circuit, etc.).

As shown in Fig. 1, the voice assistant application uses a pre-trained model 140 to perform interaction in various appropriate modes with the user 150. As an example, the pre-trained model 140 may be a language model or a generative model that supports multimodal data processing.

In some embodiments, the pre-trained model 140 may be deployed at the terminal device 120. Alternatively, the pre-trained model 140 may also be deployed at the server 130. In the case that the pre-trained model 140 is deployed at the server 130, the terminal device 120 may invoke the model 140 via a communication connection with the server 130 to implement interaction in the voice assistant application. For example, the server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the voice assistant application in the terminal device 120.

In some embodiments, the electronic device 110 may have a plurality of working modes. Different working modes, for example, may be related to the working mode of the image acquisition unit 115.

Taking the headphone device as an example, in the case that the headphone device is in a normal conversation mode, the image acquisition unit 115 will not be enabled by default, for example. The image acquisition unit 115 will only be enabled in response to a clear instruction (e.g., taking a photo) of the user being received.

As will be described in detail below, the electronic device 110 may also support running in a first mode. The first mode may support, for example, that the image acquisition unit 115 will be in a normally-on state, and in the first mode, the image acquisition unit 115 may periodically capture images 125.

For example, during the user wears the electronic device 110, the user may turn on the first mode of the electronic device 110. The specific process of enabling the first mode will be described in detail below. For example, the user may use a voice instruction (for example, "enable the first mode") to trigger the electronic device 110 to enter the first mode.

Accordingly, during the first mode, the image acquisition unit 115 of the electronic device 110 may periodically capture images. For example, during the headphone device worn by the user is in the first mode, the camera of the headphone device may periodically capture images of the surroundings of the user.

As shown in Fig. 1, the captured images 125 may be sent to the terminal device 120 for use in responding to a visual interaction request initiated by the user 150.

As an example, the audio acquisition unit of the electronic device 110 may obtain first speech content 135 of the user 150. As an example, the first speech content 135 may be "What is this?". The first speech content 135 may express the interaction request of the user 150 regarding visual content.

Further, the model 140 may use at least one image of the plurality of images 125 captured in the first mode to respond to the visual interaction request of the user 150. Specifically, after the first speech content 135 is determined to be associated with the visual interaction request, the plurality of images 125 or relevant images in the plurality of images 125 may be provided to the model 140 for generating response content, e.g., second speech content 145, for the visual interaction request.

As will be described in detail below, it may be determined by the electronic device 110, the terminal device 120, the server 130, and/or the model 140 whether the first speech content 135 is associated with the visual interaction request based on the first speech content 135 or corresponding text content thereof.

In addition, the response content generated by the model 140 based on the images captured by the image acquisition unit 115 and/or the first speech content 135 may be the second speech content 145, or text content corresponding to the second speech content 145. The generated text content may be converted into the second speech content 145 by the model 140, the server 130, and/or the terminal device 120.

Taking Fig. 1 as an example, the second speech content 145 may include, for example, reply content for the first speech content 135, such as "This is an apple". For example, the audio playing unit of the electronic device 110 may play the second speech content 145 to the user.

Therefore, in the first mode, the interaction system 100 may continuously capture a plurality of images by using the image acquisition unit 115 equipped on the electronic device 110, and generate a response to a visual interaction request by using the captured images after receiving the visual interaction request of the user. Therefore, the embodiments of the present disclosure are able to achieve a timely response to the visual interaction request.

In addition, the interaction system 100 may support using historical captured images to respond to the visual interaction requests of the user, thereby improving the efficiency of voice interaction. For example, the voice assistant application may use a historical image captured five minutes ago to process the current visual interaction request of the user (for example, "What is the name of the store I saw five minutes ago").

It should be understood that the structures and functions of the various elements in the interaction system 100 are described only for the purpose of illustration, without suggesting any limitation to the scope of the present disclosure.

The specific processing flow of the interaction system 100 will be described in detail below with reference to the drawings.

### EXAMPLE SPEECH INTERACTION

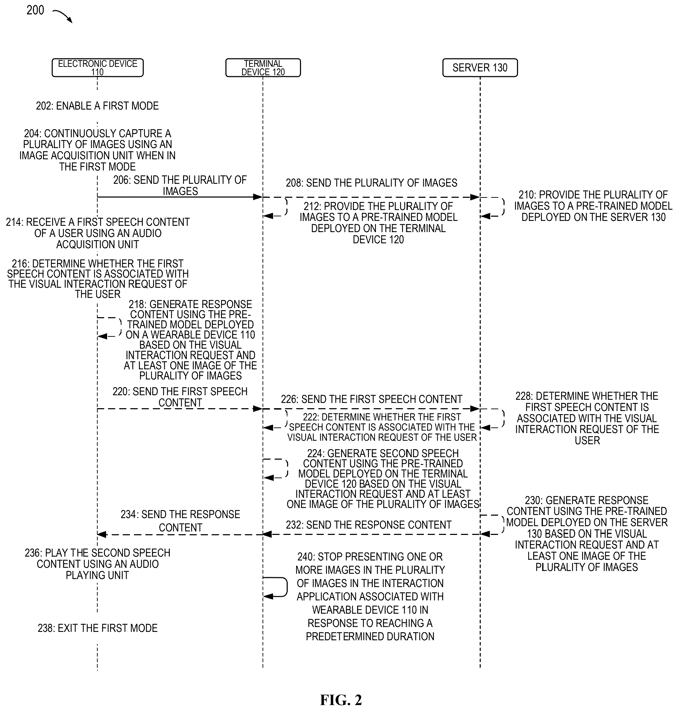

Fig. 2 illustrates a flowchart of an example process 200 for speech interaction according to some embodiments of the present disclosure. The process 200 may be implemented at the electronic device 110, the terminal device 120, and/or the server 130. Alternatively, the process 200 may also be implemented in the interaction system 100 including the electronic device 110 and the terminal device 120 in wireless communication. The process 200 is described below with reference to Fig. 1.

As shown in Fig. 2, the electronic device 110 may enable (202) the first mode. As an example, the first mode may be a mode in which the image acquisition unit 115 of the electronic device 110 is set to be normally on. Alternatively, the electronic device 110 may also include a second mode (for example, a normal conversation mode). For example, the second mode may indicate that the image acquisition unit of the electronic device 110 is not enabled by default. The image acquisition unit 115 will only be enabled in response to a clear instruction (e.g., "take a photo") from the user being received. The mode of the electronic device 110 may be determined based on a configuration operation of the user 150. Alternatively, the electronic device 110 may also switch the mode of the electronic device (for example, switch from the first mode to the second mode) in response to a preset operation of the user (for example, a voice instruction (for example, "switch to the second mode"), etc.).

As an example, the first mode of the electronic device 110 may be enabled in response to an enable request of the user 150. As an example, such an enable request may include, for example, a voice instruction (for example, also referred to as a first voice instruction) received via the audio acquisition unit of the electronic device 110. As an example, the first voice instruction may include, for example, a preset keyword (for example, "enable the first mode", "start a conversation", etc.). The present disclosure is not intended to limit the specific content of the preset keyword. In this way, the embodiments of the present disclosure may support the user to quickly enable the first mode of the electronic device 110 based on the voice instruction, thereby improving the interaction efficiency between the user and the electronic device.

Alternatively, the electronic device 110 may be associated with the voice assistant application. As an example, the voice assistant application may be installed in the terminal device 120. The electronic device 110 may receive a first voice instruction (for example, voice content associated with a preset keyword (for example, "enable the first mode")) of the user 150 in a conversation with the voice assistant application. For example, the user may have a conversation with the voice assistant based on the voice assistant application. The electronic device 110 may enable the first mode of the electronic device 110 in response to receiving an end request of the conversation. Alternatively, the electronic device 110 may enable the first mode of the electronic device 110 in response to no voice message being received in the conversation with the voice assistant application within a preset time period (for example, 2 minutes). In this way, the embodiments of the present disclosure may support the user to enable the first mode of the electronic device through the conversation with the voice assistant application. In addition, the embodiments of the present disclosure are able to support enabling the first mode of the electronic device 110 after the conversation with the voice assistant application ends, which effectively avoids a conflict between the process of the electronic device 110 in the first mode receiving voice content and the conversation process between the user and the voice assistant application, and ensures the quality of interaction between the user and the electronic device 110 and the quality of between the user and the voice assistant application.

As an example, the voice assistant may include any appropriate processing entity that supports interaction through prompts and the like. In some scenarios, the voice assistant may include, but is not limited to, an agent or other assistants that support interaction through conversations (for example, text conversations or voice conversations, etc.). It should be understood that, on the one hand, the voice assistant may have a virtual image for interaction. On the other hand, the voice assistant may also use an appropriate model to drive its interaction behavior, and such a model may include any appropriate machine learning model, such as a generative model. The present disclosure is not intended to limit the specific construction method of the voice assistant.

Alternatively, such an enable request may include, for example, an enabling operation received via an interactive interface associated with the electronic device 110. Such an interactive interface, for example, may be provided by the terminal device 120 communicating with the electronic device 110.

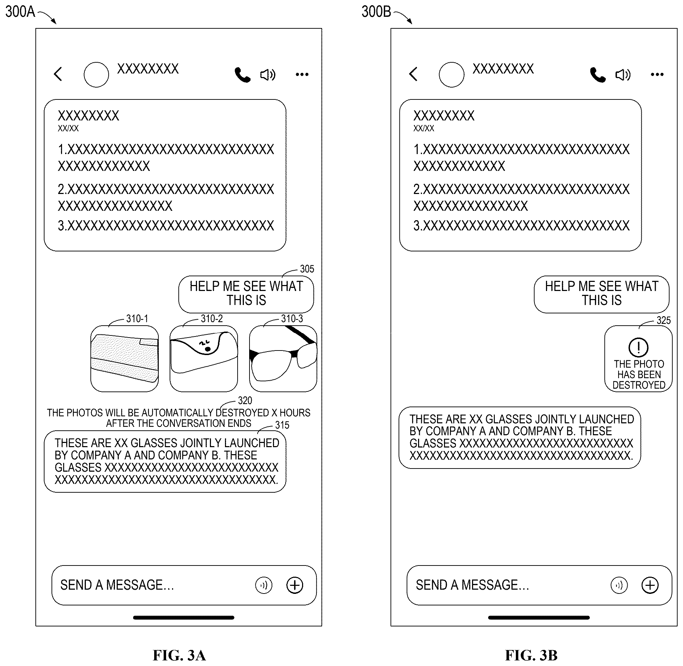

The process 200 is illustratively described below based on Fig. 3A and Fig. 3B. It should be understood that Fig. 3A and Fig. 3B and the corresponding embodiments are only used for illustration, and are not used to limit the protection scope of the present disclosure.

Fig. 3A and Fig. 3B illustrate an example interface 300A and an example interface 300B according to some embodiments of the present disclosure. The interface 300A and the interface 300B, for example, may be provided by the terminal device 120 shown in Fig. 1.

In some embodiments, as shown in Fig. 3A, the terminal device 120 may present the interactive interface 300A. Alternatively, the terminal device 120 may trigger the electronic device 110 to enable the first mode in response to receiving an enabling operation of the user 150 in the interactive interface 300A. Alternatively, such an enabling operation may include triggering (for example, a click operation) a control (not shown in the figure) associated with the first mode in the interactive interface 300A.

As an example, the interactive interface 300A may include a chat interface between the user 150 and the voice assistant application (or a graphical interface of the voice assistant application). The user 150 may interact with the voice assistant through text, voice, video, or triggering of interactive controls based on the interactive interface 300A. Further, the voice assistant may respond to the user's interaction behavior. For example, the voice assistant may generate a chat message or perform a corresponding action (for example, invoke other applications (such as playing music, etc.)) for the user's interaction behavior. Further, the terminal device 120 may present the chat message generated by the voice assistant in the interactive interface 300A. For example, the form of the chat message may include a text form, an audio form, or an image form (including picture content and video content). Alternatively, the terminal device 120 may trigger the electronic device 110 to enable the first mode in response to receiving an enabling operation of the user 150 in the interactive interface 300A. For example, such an enabling operation may include a chat message (for example, "enable the first mode", etc.) containing a preset keyword sent by the user 150 to the voice assistant.

In some embodiments, the enable request for the first mode may also include, for example, a physical operation instruction received via the electronic device 110 and/or the terminal device 120. For example, such a physical operation instruction may be received based on a sensor unit (for example, a pressure sensor, a capacitive touch button, an acceleration sensor, etc.) configured on the electronic device 110 or the terminal device 120. For example, such physical operation instructions may include a click operation (for example, a single-click operation or a double-click operation, etc.), a long-press operation, etc. on the electronic device 110 and/or the terminal device 120.

In some embodiments, with continued reference to Fig. 2, the electronic device 110 may use the image acquisition unit 115 to continuously capture (204) the plurality of images during the electronic device 110 is in the first mode. For example, the electronic device 110 may determine a capturing interval associated with the first mode, and periodically capture the plurality of images based on the capturing interval. As an example, the electronic device 110 may determine the capturing interval for capturing the plurality of images based on configuration information (also referred to as second configuration information) associated with the first mode. As an example, such second configuration information may be determined based on user operations (for example, voice instructions, selection of relevant controls, etc.). For example, the capturing interval at which the electronic device 110 captures the plurality of images may be, for example, every 1 second, every 2 seconds, etc. The present disclosure is not intended to limit the specific value of the capturing interval.

Alternatively, the electronic device 110 may determine a resolution associated with the first mode. Further, the electronic device 110 may capture at least part of the plurality of images based on the resolution. For example, the electronic device 110 may determine the resolution based on configuration information (also referred to as first configuration information) associated with the first mode. For example, the configuration information associated with the first mode includes preset configuration information or configuration information determined by a configuration operation of the user 150. As an example, the image may include picture content and/or video content. For example, for video content capturing, the resolution associated with the first mode may be, for example, the first resolution (for example, 720P). For picture content capturing, the resolution associated with the first mode may be, for example, the second resolution (for example, 1280×720 pixels).

Alternatively, the electronic device 110 may also determine the resolution based on a voice instruction (for example, also referred to as a third voice instruction) of the user 150. For example, the electronic device 110 may update the resolution (for example, adjusting the resolution of the captured picture from 1280×720 pixels to 1920×1080 pixels) in response to receiving the third voice instruction (for example, "take a clearer picture") of the user.

In some embodiments, the electronic device 110 is a headphone device or a glasses device equipped with at least one camera. In this way, the embodiments of the present disclosure are able to meet the user's visual interaction needs by equipping the camera on the headphone device or the glasses device.

In some embodiments, the electronic device 110 may include a plurality of image acquisition units (e.g., cameras). As an example, such a plurality of image acquisition units may include, for example, two image acquisition units or more than two image acquisition units. The plurality of image acquisition units may include, for example, the image acquisition unit 115. Taking the electronic device 110 as a headphone device as an example. The headphone device may include a left-ear headphone (or referred to as a first device) or a right-ear headphone (or referred to as a second device). The left-ear headphone and the right-ear headphone may each be equipped with at least one image acquisition unit (e.g., a camera). The electronic device 110 may use a target image acquisition unit of the plurality of image acquisition units to capture all of the plurality of images. For example, the target image acquisition unit is determined based on configuration information (also referred to as third configuration information) associated with the first mode. For example, such configuration information may indicate that during the electronic device 110 is in the first mode, an image acquisition unit associated with the left-ear headphone is used as the target image acquisition unit in a first time period (e.g., the first half an hour d the electronic device 110 is in the first mode), and an image acquisition unit associated with the right-ear headphone is used as the target image acquisition unit in a second time period (e.g., after the electronic device 110 has been in the first mode for half an hour).

Alternatively, the target image acquisition unit may also be determined based on a wearing state of the electronic device 110. For example, the electronic device 110 may use an image acquisition unit equipped on the left-ear headphone as the target image acquisition unit in response to the user 150 only wearing the first device (e.g., the left-ear headphone) of the electronic device 110 (e.g., the headphone device).

In some embodiments, the electronic device 110 may alternately use a first image acquisition unit and a second image acquisition unit in the image acquisition units to continuously capture images. As an example, the electronic device 110 may continuously capture a first set of images using the first image acquisition unit of the plurality of image acquisition units during a first round of conversation. In addition, the electronic device 110 may continuously capture a second set of images using the second image acquisition unit of the plurality of image acquisition units during a second round of conversation after the first round of conversation ends. The second image acquisition unit is different from the first image acquisition unit. For example, taking the electronic device 110 as a headphone device as an example. The electronic device 110 may periodically capture the first set of images using an image acquisition unit (e.g., the first image acquisition unit) equipped on the left-ear headphone during the first round of conversation, and periodically capture the second set of images using an image acquisition unit (e.g., the second image acquisition unit) equipped on the right-ear headphone during the second round of conversation after the first round of conversation ends. In this way, the embodiments of the present disclosure are able to use the same image acquisition unit to capture images in the same round of conversation, which ensures the stability of capturing images during the same round of conversation, and ensures the quality and relevance of the captured images. In addition, according to the embodiments of the present disclosure, different image acquisition units are used to capture images in different rounds of conversation, and by rotating the image acquisition units, problems such as performance degradation or insufficient power caused by long-time operation of the image acquisition unit may be avoided, thereby ensuring the stability and reliability of capturing image. Alternatively, the electronic device 110 may use the first image acquisition unit to continuously capture images for a first duration, and use the second image acquisition unit to continuously capture images for a second duration. Alternatively, the first duration and the second duration may correspond to a same time length or different time lengths. As an example, the first duration and the second duration may both be, for example, 30 seconds.

In some embodiments, the electronic device 110 may send (206) (or transmit) the plurality of images captured based on the image acquisition unit to the terminal device 120. For example, the electronic device 110 may transmit an image to the terminal device 120 in real time in response to receiving the image captured by the image acquisition unit. Alternatively, in the case that the transmission speed is slower than the capturing speed, the electronic device 110 may store the images in the buffer unit, so as to send the images in the buffer unit to the terminal device 120 in turn. As an example, the terminal device 120 may obtain the plurality of images from the electronic device 110 in wireless communication with the terminal device 120. In this way, the embodiments of the present disclosure are able to transmit the plurality of images captured by the electronic device to the terminal device in advance in real time. In this way, the terminal device has already obtained the images transmitted by the electronic device before receiving the visual interaction request of the user, thereby shortening the waiting time of the user in the process of processing the visual interaction request, improving the efficiency of processing the visual interaction request, and satisfying the interaction needs of the user.

In some embodiments, the electronic device 110 may output response content to the user in response to a visual interaction request of the user. The electronic device 110 may use the audio acquisition unit equipped on the electronic device 110 to receive (210) the first speech content of the user 150. Further, the electronic device 110 may determine whether the first speech content is associated with the visual interaction request of the user 150. As an example, the electronic device 110 may determine that the first speech content is associated with the visual interaction request (for example, "identify item") of the user 150 in response to determining that the first speech content (for example, "Please help me see what this is") includes a preset keyword (for example, "see", "what is this", etc.). Alternatively, the electronic device 110 may determine whether the first speech content includes the preset keyword based on the terminal device 120 in wireless communication.

Alternatively, the electronic device 110 may transmit the first speech content to the pre-trained model, so that the pre-trained model determines whether the first speech content is associated with the visual interaction request of the user 150, and determines the visual interaction request of the user 150 based on the first speech content. The deployment of the pre-trained model may be divided into three types: the pre-trained model is deployed at the electronic device 110, the pre-trained model is deployed at the terminal device 120, or the pre-trained model is deployed at the server 130. The following will provide illustrative descriptions for different model deployment locations respectively.

The first type, in the case that the electronic device 110 is deployed with a pre-trained model (e.g., the model 140). The electronic device 110 may determine (220) whether the first speech content is associated with the visual interaction request of the user. For example, the electronic device 110 may determine whether the first speech content is associated with the visual interaction request of the user based on the pre-trained model deployed on the electronic device 110. In addition, the electronic device 110 may provide at least one of the plurality of images to the pre-trained model (e.g., the model 140) in response to the first speech content being determined to be associated with the visual interaction request of the user, so that the pre-trained model generates response content for the visual interaction request based on the first speech content and/or the at least one of the plurality of images. The response content is second speech content or text content corresponding to the second speech content. Alternatively, the electronic device 110 may send (222) the visual interaction request to the terminal device 120 in response to the first speech content being determined to be associated with the visual interaction request of the user 150.

Alternatively, in the case that the electronic device 110 is not deployed with the pre-trained model, the electronic device 110 may directly send (212) the first speech content to the terminal device 120, so as to determine whether the first speech content is associated with the visual interaction request of the user 150 based on the terminal device 120.

The second type, the terminal device 120 is deployed with a pre-trained model (e.g., the model 140). The terminal device 120 may use the pre-trained model deployed at the terminal device 120 to determine (218) whether the first speech content is associated with the visual interaction request of the user 150 in response to receiving the first speech content. Further, the terminal device 120 may transmit at least one of the plurality of images to the pre-trained model after the first speech content is determined to be associated with the visual interaction request of the user 150. The terminal device 120 may use (224) the pre-trained model to generate response content for the visual interaction request based on the visual interaction request and the at least one of the plurality of images. The response content is second speech content or text content corresponding to the second speech content. In addition, the terminal device 120 may send (232) the second speech content (or the text content corresponding to the second speech content) to the electronic device 110.

Alternatively, the terminal device 120 may determine whether the first speech content is associated with the visual interaction request of the user 150 by using another model. Such another model may be implemented as a classification model (for example, a classification model whose output result includes being associated with the visual interaction request of the user 150 or not being associated with the visual interaction request of the user 150). Such a classification model may be deployed in the terminal device 120 or the server 130 communicating with the terminal device 120, for example. The present disclosure is not intended to limit the specific implementation or training process of the classification model.

Alternatively, in the case that the terminal device 120 is not deployed with the pre-trained model, the terminal device 120 may directly send (214) the first speech content to the server 130, so as to determine whether the first speech content is associated with the visual interaction request of the user 150 based on the server 130. The server 130 may use the pre-trained model (e.g., the model 140) deployed at the server 130 to determine (216) whether the first speech content is associated with the visual interaction request of the user 150, and transmit the determination result to the terminal device 120.

Additionally, the terminal device 120 may send (226) at least one image of the plurality of images to the server 130 in response to the first speech content being determined to be associated with the visual interaction request of the user 150. The server 130 may use (228) the pre-trained model (e.g., the model 140) deployed at the server 130 to generate response content for the visual interaction request based on the visual interaction request and the at least one of the plurality of images. The response content is second speech content or text content corresponding to the second speech content. In addition, the server 130 may send (230) the response content to the terminal device 120.

Additionally, or alternatively, the at least one of the plurality of images transmitted to the pre-trained model is determined from the plurality of images based on a correlation between the visual interaction request and the plurality of images. For example, if the visual interaction request associated with the first speech content (for example, "help me see what is on the table") is "identify what is on the table", the at least one image may be an image containing a table in the plurality of images.

Alternatively, in the process of generating the second speech content using the pre-trained model. The electronic device 110, the terminal device 120, or the server 130 may also transmit the plurality of images from the electronic device 110 to the pre-trained model (e.g., the model 140) to construct context information corresponding to the plurality of images. In this way, the pre-trained model may obtain rich context information, so that the intention of the user 150 may be understood more accurately. As an example, the pre-trained model may be generated based on a part of the context information corresponding to the at least one image. For example, the plurality of images may include a plurality of images corresponding to a plurality of items (for example, "stool", "apple", "sofa", etc.). The visual interaction request corresponding to the first speech content (for example, "What kind of fruit is this?") is "identify the fruit type". The second speech content generated by the pre-trained model may be generated based on part of context information (for example, "an apple") corresponding to at least one image (for example, an "apple" image) in the plurality of images to generate the second speech content (for example, "The fruit here is an apple"), or text content corresponding to the second speech content.

In some embodiments, the electronic device 110 may use the audio playing unit equipped on the electronic device 110 to play (234) the second speech content.

In some embodiments, with continued reference to Fig. 3A, the electronic device 110 may trigger display of a first message corresponding to the first speech content in the interactive interface associated with the electronic device 110. For example, the terminal device 120 may present the interactive interface 300A associated with the electronic device 110. The terminal device 120 may present the first message 305 (for example, "help me see what this is") corresponding to the first speech content in the interactive interface 300A.

In some embodiments, with continued reference to Fig. 2, the terminal device 120 may present (208) one or more images of the plurality of images in an interactive application associated with the electronic device 110. Alternatively, the electronic device 110 may trigger display of one or more images of the plurality of images in the interactive interface associated with the electronic device 110. As an example, the one or more images may include at least one image for generating the second speech content. The one or more images may include, for example, a first captured image in the plurality of images. For example, as shown in Fig. 3A, the terminal device 120 may present an image 310-1, an image 310-2, and/or an image 310-3 in the plurality of images in the interactive interface 300A.

Alternatively, with continued reference to Fig. 3A, the electronic device 110 may trigger display of a second message corresponding to the second speech content in the interactive interface associated with the electronic device 110. For example, the terminal device 120 may present the second message 315 (for example, a description of the identified glasses) corresponding to the second speech content in the interactive interface 300A.

Additionally, or alternatively, the terminal device 120 may present reminder information 320 (for example, "the photos will be automatically destroyed X hours after the conversation ends") in the interactive interface 300A to remind the user 150 that the image 310-1, the image 310-2, the image 310-3, etc. presented in the interactive interface 300A will be destroyed after X hours.

In some embodiments, with continued reference to Fig. 2, the terminal device 120 may stop (236) presenting one or more images of the plurality of images in the interactive application associated with the electronic device 110 in response to a preset duration (for example, 2 hours) being reached. As an example, as shown in Fig. 3B, the terminal device 120 may stop presenting the one or more images in the interactive interface 300B in response to presenting the one or more images of the plurality of images for the preset duration (for example, 2 hours). Alternatively, the terminal device 120 may present an indication element 325 (for example, "the photo has been destroyed") in the interactive interface to indicate that the one or more images have been stopped being presented and deleted.

In some embodiments, with continued reference to Fig. 2, the electronic device 110 may exit (238) the first mode. For example, the electronic device 110 may exit the first mode in response to the power of the electronic device 110 being below a threshold (for example, 5%). Alternatively, the electronic device 110 may exit the first mode in response to the wearing state of the electronic device 110 not satisfying a predetermined condition (for example, the user 150 stops wearing the electronic device 110 (for example, takes off the headphone device)). Alternatively, the electronic device 110 may exit the first mode in response to a voice instruction (also referred to as a second voice instruction) received via the audio acquisition unit. For example, such a second voice instruction may be associated with a preset keyword (for example, "exit the first mode", "turn off the conversation mode", etc.).

Based on the process described above, the embodiments of the present disclosure are able to periodically capture a plurality of images using the image acquisition unit equipped on the electronic device during the electronic device is in the first mode. In addition, the embodiments of the present disclosure are able to obtain and play, using the electronic device, the second speech content generated by the model based on the first speech content and the plurality of images, after the electronic device receives the first speech content associated with the visual interaction request of the user. In this way, the electronic device provided by the embodiments of the present disclosure is able to generate and play corresponding speech content for the captured image content and the speech content of the user, thereby improving the efficiency of the user in obtaining information, expanding the interaction capability between the electronic device and the user, and satisfying the interaction needs of the user. In addition, since the electronic device provided in the embodiments of the present disclosure periodically captures images, instead of starting to capture images after obtaining the speech content of the user, the efficiency of processing the speech content may be improved, and the waiting time of the user may be reduced.

### Example process

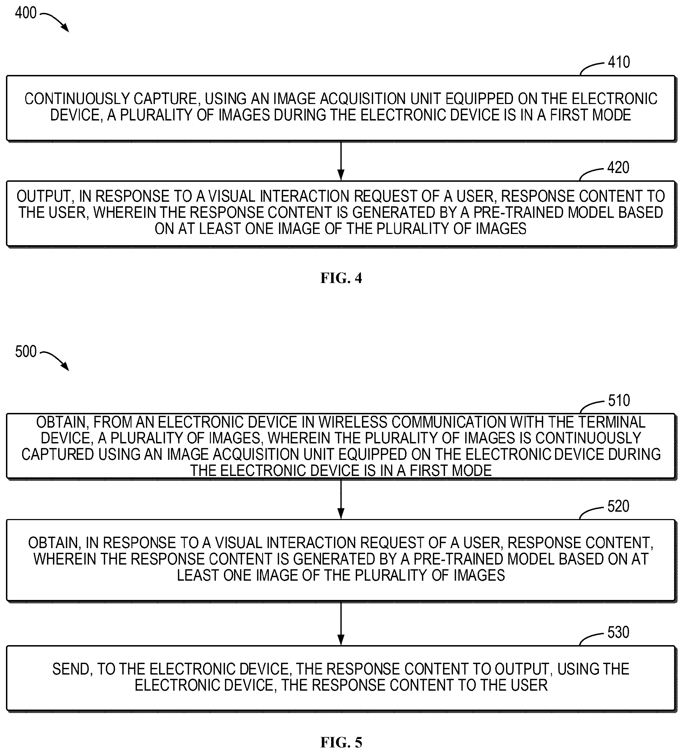

Fig. 4 illustrates a flowchart of an example process 400 of interaction according to some embodiments of the present disclosure. The process 400 may be implemented at the electronic device 110. The process 400 is described below with reference to Fig. 1.

As shown in Fig. 4, at block 410, the electronic device 110 continuously captures a plurality of images using an image acquisition unit equipped on the electronic device 110 during the electronic device 110 is in a first mode.

At block 420, the electronic device 110 outputs response content to a user in response to a visual interaction request of the user, wherein the response content is generated by a pre-trained model based on at least one image of the plurality of images.

In some embodiments, the electronic device is equipped with an audio acquisition unit, and responding to the visual interaction request of the user includes: in response to first speech content of the user received by the audio acquisition unit being determined to be associated with the visual interaction request of the user; and/or, the electronic device is equipped with an audio playing unit, and outputting the response content to the user includes: playing second speech content to the user through the audio playing unit, wherein the second speech content is generated by the pre-trained model based on at least one image of the plurality of images.

In this way, the embodiments of the present disclosure are able to support using the audio acquisition unit of the electronic device to obtain the speech content to determine whether the speech content is associated with the visual interaction request of the user. In addition, the embodiments of the present disclosure are able to support using the audio playing unit of the electronic device to play the generated speech content to the user. In this way, the embodiments of the present disclosure are able to improve the interaction efficiency between the user and the electronic device.

In some embodiments, the second speech content is generated through: generate, in response to the first speech content being associated with the visual interaction request, the response content for the visual interaction request based on the visual interaction request and the at least one of the plurality of images using the pre-trained model, the response content being the second speech content or text content corresponding to the second speech content.

In this way, the embodiments of the present disclosure generate the response content for the visual interaction request based on the pre-trained model, which may improve the visual interaction efficiency of the user.

In some embodiments, the electronic device 110 is in wireless communication with the terminal device 120, and the process 400 further includes: transmitting the plurality of images from the electronic device 110 to the terminal device 120 before determining whether the first speech content is associated with the visual interaction request of the user.

In this way, the embodiments of the present disclosure are able to transmit the plurality of images to the terminal device in advance, thereby shortening the waiting time of the user in the process of processing the visual interaction request, and improving the interaction efficiency.

In some embodiments, the terminal device 120 is further configured to: transmit at least one image of the plurality of images to the pre-trained model after the first speech content is determined to be associated with the visual interaction request of the user 150.

In this way, the embodiments of the present disclosure are able to process the visual interaction request based on the at least one image by the pre-trained model, thereby satisfying the visual interaction needs of the user.

In some embodiments, the terminal device 120 is further configured to: transmit the plurality of images from the electronic device 110 to the pre-trained model to construct context information corresponding to the plurality of images.

In this way, the embodiments of the present disclosure are able to provide the context information of the plurality of images to the pre-trained model, so that the pre-trained model is able to process the visual interaction request of the user based on the context information, thereby improving the accuracy of processing the visual interaction request.

In some embodiments, the second speech content is further generated based on a part of the context information corresponding to the at least one image.

In this way, the embodiments of the present disclosure are able to generate the second speech content that satisfies the needs of the user based on part of the context information corresponding to the at least one image, thereby improving the quality of generating the second speech content.

In some embodiments, the pre-trained model is deployed at the terminal device 120 or a server 130 communicating with the terminal device 120.

In this way, the embodiments of the present disclosure are able to support deploying the model in the terminal device or the server as needed, which may meet the needs of different scenarios.

In some embodiments, the process 400 further includes: determining that the first speech content is associated with the visual interaction request of the user in response to determining that the first speech content includes a preset keyword; and/or, transmitting the first speech content to the pre-trained model to determine whether the first speech content is associated with the visual interaction request of the user by the pre-trained model.

In this way, the embodiments of the present disclosure are able to determine whether the first speech content is associated with the visual interaction request of the user based on the preset keyword or the pre-trained model, thereby improving the recognition accuracy of the visual interaction request and satisfying the needs of the user.

In some embodiments, the at least one image is determined from the plurality of images based on a correlation between the visual interaction request and the plurality of images.

In this way, the embodiments of the present disclosure are able to determine the at least one image for sending to the pre-trained model based on the correlation between the visual interaction request and the plurality of images, which reduces the task complexity of processing images by the pre-trained model, thereby improving the processing efficiency.

In some embodiments, continuously capturing the plurality of images using the image acquisition unit equipped on the electronic device 110 includes: determining a resolution associated with the first mode and capturing at least part of the plurality of images based on the resolution; and/or, determining a capturing interval associated with the first mode and periodically capturing the plurality of images based on the capturing interval.

In this way, images may be captured based on the configured resolution, which ensures the stability of image quality. In addition, the embodiments of the present disclosure are able to determine the capturing interval for capturing the plurality of images, thereby being able to meet the needs of the user to capture images at different time intervals.

In some embodiments, the first mode is enabled in response to an enable request of the user, and the enable request includes: an enabling operation received via an interactive interface with the electronic device 110; or, a voice instruction; or, a physical operation instruction.

In this way, the embodiments of the present disclosure are able to provide the user with multiple enabling operations for enabling the first mode, thereby improving the efficiency of the user in enabling the first mode of the electronic device.

In some embodiments, the electronic device 110 is associated with a voice assistant application, and the process 400 further includes: receiving a first voice instruction of the user in a conversation with the voice assistant application; and enabling the first mode of the electronic device 110 in response to receiving an end request of the conversation or no voice message being received in the conversation within a predetermined time period.

In this way, the embodiments of the present disclosure are able to support the user to use the voice instruction with the voice assistant application to enable the first mode of the electronic device, thereby improving the efficiency of the user. In addition, by enabling the first mode of the electronic device after the conversation ends, the present disclosure is able to avoid a conflict between the process of the electronic device in the first mode receiving the voice instruction and the conversation process between the user and the voice assistant application, thereby ensuring the stability and reliability of the speech interaction function provided by the electronic device.

In some embodiments, the electronic device includes a plurality of image acquisition units, and continuously capturing the plurality of images using the image acquisition unit equipped on the electronic device includes: continuously capturing images alternately using a first image acquisition unit and a second image acquisition unit in the image acquisition units.

In this way, the embodiments of the present disclosure support taking turns to perform capturing activities through different image acquisition units on the electronic device, thereby being able to improve the capturing efficiency and the capturing quality.

In some embodiments, the electronic device 110 includes a plurality of image acquisition units, and continuously capturing the plurality of images using the image acquisition unit equipped on the electronic device 110 includes: capturing all of the plurality of images using a target image acquisition unit of the plurality of image acquisition units, the target image acquisition unit being determined based on configuration information associated with the first mode and/or a wearing state of the electronic device.

In this way, the embodiments of the present disclosure are able to determine the target acquisition unit for capturing the plurality of images based on the configuration information, thereby being able to meet the diverse needs of the user and improving the efficiency. In addition, the embodiments of the present disclosure are able to determine the target acquisition unit for capturing the plurality of images based on the wearing state, which is able to adapt to the wearing operation of the user, so that the user may freely choose the wearing mode, which brings convenience to the user.

In some embodiments, continuously capturing images alternately using the first image acquisition unit and the second image acquisition unit in the plurality of image acquisition units includes: continuously capturing a first set of images using the first image acquisition unit of the plurality of image acquisition units during a first round of conversation; and continuously capturing a second set of images using the second image acquisition unit of the plurality of image acquisition units during a second round of conversation after the first round of conversation ends, the second image acquisition unit being different from the first image acquisition unit; and/or, continuously acquisition images for a first duration using the first image acquisition unit of the plurality of image acquisition units, and continuously capturing images for a second duration using the second image acquisition unit of the plurality of image acquisition units, the first duration and the second duration corresponding to a same time length or different time lengths.

In this way, the embodiments of the present disclosure are able to support using different image acquisition units to capture images in different rounds of conversation, thereby being able to avoid the problems of performance degradation or insufficient power caused by the continuous operation of a single image acquisition unit, and thus being able to ensure the stability of the image acquisition function. In addition, in the same round of conversation, keeping using the same image acquisition unit may ensure that the capturing level or the capturing effect of the plurality of images associated with the same round of conversation is consistent.

In some embodiments, the process 400 further includes: exiting the first mode in response to a power level of the electronic device 110 being below a threshold; or the electronic device including a wearable device, exiting the first mode in response to a wearing state of the electronic device 110 not satisfying a preset condition; or exiting the first mode in response to a second voice instruction received via the electronic device.

In this way, the embodiments of the present disclosure are able to exit the electronic device from the first mode in response to the preset condition being met, thereby being able to meet the needs of the user and ensuring the stability of the function provided during the electronic device is in the first mode.

In some embodiments, the process 400 further includes: triggering to display in an interactive interface associated with the electronic device 110: a first message corresponding to the first speech content; a second message corresponding to the second speech content; and one or more images of the plurality of images.

In this way, the embodiments of the present disclosure are able to present various content associated with the first mode in the interactive interface, thereby satisfying the viewing needs and interaction needs of the user.

In some embodiments, the one or more images include: at least one image for generating the second speech content; and/or a first captured image of the plurality of images.

In this way, the embodiments of the present disclosure are able to selectively determine the image content presented in the interactive interface, so that the user may be provided with image content that better meets the needs of the user, and the occupancy of the memory of the device of the user caused by the presentation of a large number of irrelevant images may also be reduced.

In some embodiments, the electronic device includes a wearable device; and/or the electronic device 110 is a headphone device or a glasses device equipped with at least one camera.

In this way, the embodiments of the present disclosure are able to meet the visual interaction needs of the user by equipping a camera on the headphone device or the glasses device.

Fig. 5 illustrates a flowchart of an example process 500 of interaction according to some embodiments of the present disclosure. The process 500 may be implemented at the terminal device 120. The process 500 is described below with reference to Fig. 1.

As shown in Fig. 5, at block 510, the terminal device 120 obtains a plurality of images from an electronic device 110 in wireless communication with the terminal device 120, wherein the plurality of images are continuously captured using an image acquisition unit equipped on the electronic device 110 during the electronic device 110 is in a first mode.

At block 520, the terminal device 120 obtains response content in response to a visual interaction request of a user, wherein the response content is generated by a pre-trained model based on at least one image of the plurality of images.

At block 530, the terminal device 120 sends the response content to the electronic device 110 to output, using the electronic device 110, the response content to the user.

In some embodiments, the electronic device is equipped with an audio acquisition unit, and responding to the visual interaction request of the user includes: in response to first speech content of the user received by the audio acquisition unit being determined to be associated with the visual request of the user; and/or the electronic device is equipped with an audio playing unit, and outputting, using the electronic device, the response content to the user includes: playing second speech content to the user through the audio playing unit, wherein the second speech content is generated by the pre-trained model based on at least one image of the plurality of images.

In this way, the embodiments of the present disclosure are able to support using the audio acquisition unit of the electronic device to obtain the speech content to determine whether the speech content is associated with the visual interaction request of the user. In addition, the embodiments of the present disclosure are able to support using the audio playing unit of the electronic device to play the generated speech content to the user. In this way, the embodiments of the present disclosure are able to improve the interaction efficiency between the user and the electronic device.

In some embodiments, the process 500 further includes: transmitting at least one image of the plurality of images to the pre-trained model after the first speech content is determined to be associated with the visual interaction request of the user.

In this way, the embodiments of the present disclosure are able to process the visual interaction request based on the at least one image by the pre-trained model, thereby satisfying the visual interaction needs of the user.

In some embodiments, the terminal device 120 is further configured to: transmit the plurality of images from the electronic device 110 to the pre-trained model to construct context information corresponding to the plurality of images.

In this way, the embodiments of the present disclosure are able to provide the context information of the plurality of images to the pre-trained model, so that the pre-trained model is able to process the visual interaction request of the user based on the context information, thereby improving the accuracy of processing the visual interaction request.

In some embodiments, the second speech content is further generated based on a part of the context information corresponding to the at least one image.

In this way, the embodiments of the present disclosure are able to generate the second speech content that satisfies the needs of the user based on part of the context information corresponding to the at least one image, thereby improving the quality of generating the second speech content.

In some embodiments, the pre-trained model is deployed at the terminal device 120 or the server 130 communicating with the terminal device 120.

In this way, the embodiments of the present disclosure are able to support deploying the model in the terminal device or the server as needed, which may meet the needs of different scenarios.

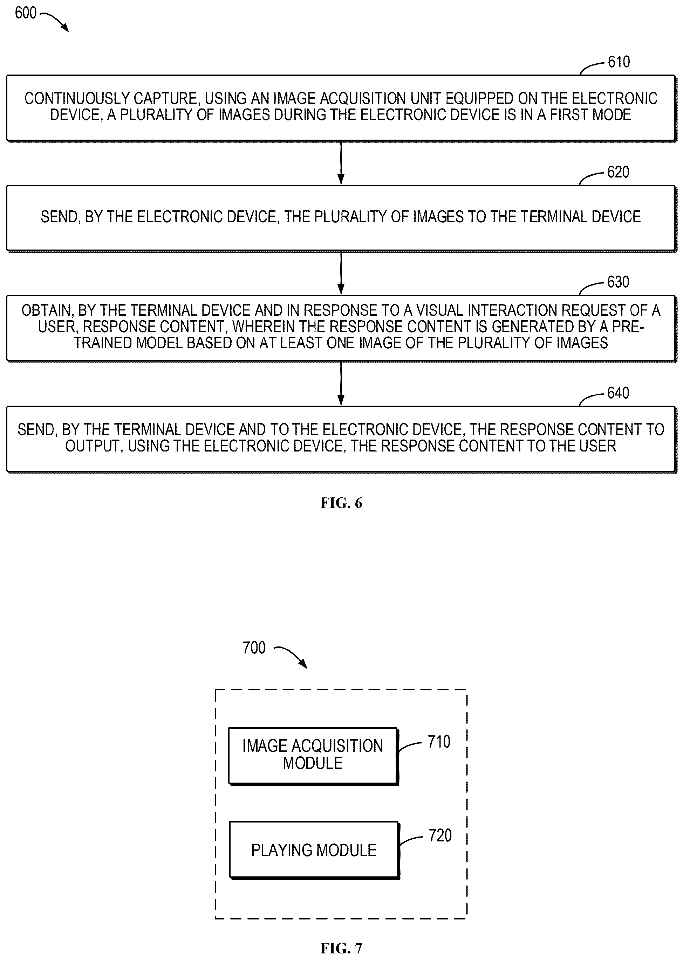

Fig. 6 illustrates a flowchart of an example process 600 of interaction according to some embodiments of the present disclosure. The process 600 may be implemented in the interaction system 100. The interaction system 100 includes the electronic device 110 and the terminal device 120 in wireless communication. The process 600 is described below with reference to Fig. 1.

As shown in Fig. 6, at block 610, the interaction system continuously captures a plurality of images using an image acquisition unit equipped on the electronic device 110 during the electronic device 110 is in a first mode.

At block 620, the interaction system 100 sends, by the electronic device 110, the plurality of images to the terminal device 120.

At block 630, the interaction system 100 obtains, by the terminal device 120, response content in response to a visual interaction request of a user, wherein the response content is generated by a pre-trained model based on at least one image of the plurality of images.

At block 640, the interaction system 100 sends, by the terminal device 120, the response content to the electronic device 110 to output, using the electronic device 110, the response content to the user.

### EXAMPLE APPARATUS AND DEVICE

The embodiments of the present disclosure further provide corresponding apparatuses for implementing the above methods or processes.

Fig. 7 illustrates a schematic structural block diagram of an example apparatus 700 for interaction according to some embodiments of the present disclosure. The apparatus 700 may be implemented as or included in the electronic device 110. Each module/component in the apparatus 700 may be implemented by hardware, software, firmware, or any combination thereof.

As shown in Fig. 7, the apparatus 700 includes: an image acquisition module 710 configured to continuously capture a plurality of images using an image acquisition unit equipped on the electronic device 110 during the electronic device 110 is in a first mode; and a playing module 720 configured to output, in response to a visual interaction request of a user, response content to the user, wherein the response content is generated by a pre-trained model based on at least one of the plurality of images.

In some embodiments, the electronic device is equipped with an audio acquisition unit, and the visual interaction request of the user includes: in response to first speech content of the user received by the audio acquisition unit being determined to be associated with the visual interaction request of the user; and/or, the electronic device is equipped with an audio playing unit, and outputting the response content to the user includes: playing second speech content to the user through the audio playing unit, wherein the second speech content is generated by the pre-trained model based on at least one image of the plurality of images.

In some embodiments, the second speech content is generated through: generate, in response to the first speech content being associated with the visual interaction request, the response content for the visual interaction request based on the visual interaction request and the at least one of the plurality of images using the pre-trained model, wherein the response content being the second speech content or text content corresponding to the second speech content.

In some embodiments, the electronic device 110 is in wireless communication with the terminal device 120, and the apparatus 700 further includes a first transmission module configured to: transmit the plurality of images from the electronic device 110 to the terminal device 120 before determining whether the first speech content is associated with the visual interaction request of the user.

In some embodiments, the terminal device 120 is further configured to: transmit at least one image of the plurality of images to the pre-trained model after the first speech content is determined to be associated with the visual interaction request of the user 150.

In some embodiments, the terminal device 120 is further configured to: transmit the plurality of images from the electronic device 110 to the pre-trained model to construct context information corresponding to the plurality of images.

In some embodiments, the second speech content is further generated based on a part of the context information corresponding to the at least one image.

In some embodiments, the pre-trained model is deployed at the terminal device 120 or a server 130 communicating with the terminal device 120.

In some embodiments, the apparatus 700 further includes a determination module configured to: determine that the first speech content is associated with the visual interaction request of the user in response to determining that the first speech content includes a preset keyword; and/or, transmit the first speech content to the pre-trained model to determine whether the first speech content is associated with the visual interaction request of the user by the pre-trained model.

In some embodiments, the at least one image is determined from the plurality of images based on a correlation between the visual interaction request and the plurality of images.

In some embodiments, the image acquisition module 710 is further configured to: determine a resolution associated with the first mode and capture at least part of the plurality of images based on the resolution; and/or, determine a capturing interval associated with the first mode and periodically capture the plurality of images based on the capturing interval.

In some embodiments, the first mode is enabled in response to an enable request from the user, and the enable request includes: an enabling operation received via an interactive interface with the electronic device 110; or, a voice instruction; or, a physical operation instruction.

In some embodiments, the electronic device 110 is associated with a voice assistant application, and the apparatus 700 further includes an enabling module configured to: receive a first voice instruction of the user in a conversation with the voice assistant application; and enable the first mode of the electronic device 110 in response to receiving an end request of the conversation or no voice message being received in the conversation within a predetermined time period.

In some embodiments, the electronic device includes a plurality of image acquisition units, and the image acquisition module 710 is further configured to: continuously capture images alternately using a first image acquisition unit and a second image acquisition unit in the image acquisition units.

In some embodiments, the electronic device 110 includes a plurality of image acquisition units, and the image acquisition module 710 is further configured to: capture all of the plurality of images using a target image acquisition unit of the plurality of image acquisition units, the target image acquisition unit being determined based on configuration information associated with the first mode and/or a wearing state of the electronic device.

In some embodiments, the image acquisition module 710 is further configured to: continuously capture a first set of images using the first image acquisition unit of the plurality of image acquisition units during a first round of conversation; and continuously capture a second set of images using the second image acquisition unit of the plurality of image acquisition units during a second round of conversation after the first round of conversation ends, the second image acquisition unit being different from the first image acquisition unit; and/or, continuously capture images for a first duration using the first image acquisition unit of the plurality of image acquisition units, and continuously capture images for a second duration using the second image acquisition unit of the plurality of image acquisition units, the first duration and the second duration corresponding to a same time length or different time lengths.

In some embodiments, the apparatus 700 further includes an exiting module configured to: exit the first mode in response to a power level of the electronic device 110 being below a threshold; or the electronic device includes a wearable module, exit the first mode in response to a wearing state of the electronic device 110 not satisfying a preset condition; or exit the first mode in response to a second voice instruction received via the electronic device.

In some embodiments, the apparatus 700 further includes a display module configured to: trigger to display in an interactive interface associated with the electronic device 110: a first message corresponding to the first speech content; a second message corresponding to the second speech content; and one or more images of the plurality of images.

In some embodiments, the one or more images include: at least one image for generating the second speech content; and/or, a first captured image of the plurality of images.

In some embodiments, the electronic device 110 includes a wearable device; and/or the electronic device 110 is a headphone device or a glasses device equipped with at least one camera.

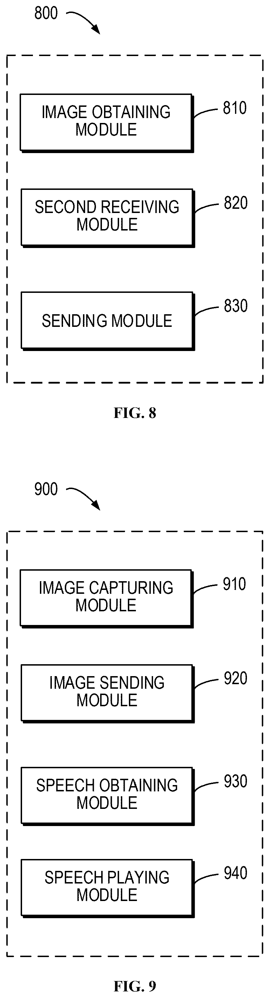

Fig. 8 illustrates a schematic structural block diagram of an example apparatus 800 for interaction according to some embodiments of the present disclosure. The apparatus 800 may be implemented as or included in the terminal device 120. Each module/component in the apparatus 800 may be implemented by hardware, software, firmware, or any combination thereof.

As shown in Fig. 8, the apparatus 800 includes: an image obtaining module 810 configured to obtain a plurality of images from an electronic device 110 in wireless communication with the terminal device 120, wherein the plurality of images is continuously captured using an image acquisition unit equipped on the electronic device 110 during the electronic device 110 is in a first mode; a second receiving module 820 configured to obtain response content in response to a visual interaction request of a user, where the response content is generated by a pre-trained model based on at least one image of the plurality of images; and a sending module 830 configured to send, by the terminal device 120, the response content to the electronic device 110 to output, using the electronic device 110, the response content to the user.

In some embodiments, the electronic device is equipped with an audio acquisition unit, and the receiving module 820 is further configured to: in response to first speech content of the user received by the audio acquisition unit being determined to be associated with a visual request of the user; and/or the electronic device is equipped with an audio playing unit, and the sending module 830 is further configured to: play second speech content to the user through the audio playing unit, wherein the second speech content is generated by the pre-trained model based on at least one image of the plurality of images.

In some embodiments, the apparatus 800 further includes a second transmission module configured to: transmit at least one image of the plurality of images to the pre-trained model after the first speech content is determined to be associated with the visual interaction request of the user.

In some embodiments, the terminal device 120 is further configured to: transmit the plurality of images from the electronic device 110 to the pre-trained model to construct context information corresponding to the plurality of images.

In some embodiments, the second speech content is further generated based on a part of the context information corresponding to the at least one image.

In some embodiments, the pre-trained model is deployed at the terminal device 120 or the server 130 communicating with the terminal device 120.

Fig. 9 illustrates a schematic structural block diagram of an example apparatus 900 for interaction according to some embodiments of the present disclosure. The apparatus 900 may be implemented as or included in the interaction system 100. The interaction system 100 includes the electronic device 110 and the terminal device 120 in wireless communication. Each module/component in the apparatus 900 may be implemented by hardware, software, firmware, or any combination thereof.

As shown in Fig. 9, the apparatus 900 includes: an image acquisition module 910 configured to continuously capture a plurality of images using an image acquisition unit equipped on the electronic device 110 during the electronic device 110 is in a first mode; an image sending module 920 configured to send, by the electronic device 110, the plurality of images to the terminal device 120; a speech obtaining module 930 configured to obtain, by the terminal device 120, response content in response to a visual interaction request of a user, wherein the response content is generated by a pre-trained model based on at least one of the plurality of images; and a speech playing module 940 configured to send, by the terminal device 120, the response content to the electronic device 110 to output, using the wearable device 110, the response content to the user.

The units included in the apparatus 700, 800, or 900 may be implemented in various ways, including software, hardware, firmware, or any combination thereof. In some embodiments, one or more units may be implemented using software and/or firmware, such as machine executable instructions stored on a storage medium. In addition to machine executable instructions or as an alternative, some or all units in the apparatus 700, 800, or 900 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and so on.

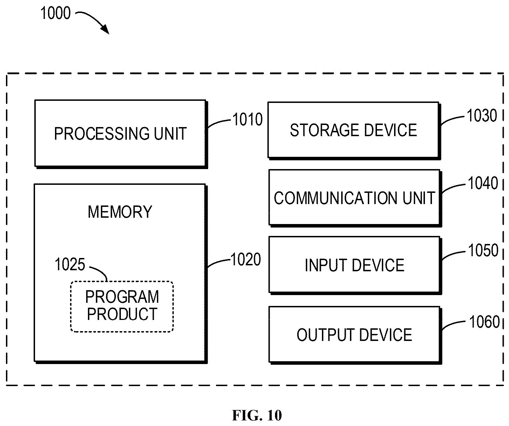

Fig. 10 illustrates a block diagram of an electronic device 1000 in which one or more embodiments of the present disclosure may be implemented. It should be understood that the electronic device 1000 shown in Fig. 10 is only illustrative, and should not constitute any limitation on the functionality and scope of the embodiments described herein. The electronic device 1000 shown in Fig. 10 may be used to implement the interaction system 100 of Fig. 1.

As shown in Fig. 10, the electronic device 1000 is in the form of a general electronic device. The components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and may execute various processes based on the programs stored in the memory 1020. In a multi-processor system, multiple processing units execute computer executable instructions in parallel to improve the parallel processing capability of the electronic device 1000.

The electronic device 1000 typically includes multiple computer storage medium. Such medium may be any available medium that is accessible to the electronic device 1000, including, but not limited to, volatile and non-volatile medium, removable and non-removable medium. The memory 1020 may be volatile memory (for example, a register, cache, Random Access Memory (RAM)), a non-volatile memory (such as a Read-Only Memory (ROM), Electrically Erasable Programmable Read-Only Memory (EEPROM), flash memory), or any combination thereof. The storage device 1030 may be any removable or non-removable medium, and may include a machine-readable medium such as a flash drive, a disk, or any other medium, which may be used to store information and/or data and may be accessed within the electronic device 1000.

The electronic device 1000 may further include additional removable/non-removable, volatile/non-volatile memory medium. Although not shown in Fig. 10, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 1020 may include a computer program product 1025, which has one or more program modules configured to perform various methods or acts of the various embodiments of the present disclosure.

The communication unit 1040 implements communication with other electronic devices through the communication medium. Additionally, the functions of the components of the electronic device 1000 may be implemented by a single computing cluster or multiple computing machines, which may communicate through communication connections. Therefore, the electronic device 1000 may use a logical connection with one or more other servers, a network personal computer (PC) or another network node to operate in a networked environment.

The input device 1050 may be one or more input devices, such as a mouse, a keyboard, a tracking ball, etc. The output device 1060 may be one or more output devices, such as a display, a speaker, a printer, etc. The electronic device 1000 may also communicate with one or more external devices (not shown) such as a storage device and a display device through the communication unit 1040 as needed, communicate with one or more devices that enable the user to interact with the electronic device 1000, or communicate with any devices (such as a network card and a modem) that enable the electronic device 1000 to communicate with one or more other electronic devices. Such communication may be performed via input/output (I/O) interfaces (not shown).

According to an illustrative implementation of the present disclosure, there is provided a computer-readable storage medium having computer executable instructions stored thereon, where the computer executable instructions are executed by a processor to implement the method described above. According to an illustrative implementation of the present disclosure, there is further provided a computer program product tangibly stored on a non-transitory computer-readable medium and including computer executable instructions, and the computer executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowcharts and/or block diagrams, and combinations of blocks in the flowcharts and/or block diagrams may be implemented by computer readable program instructions.

These computer readable program instructions may be provided to a processing unit of a general computer, a special computer, or other programmable data processing apparatus to produce a machine, so that these instructions, when executed by the processing unit of the computer or other programmable data processing apparatus, produce an apparatus for implementing the functions/actions specified in one or more blocks of the flowcharts and/or block diagrams. These computer readable program instructions may also be stored in a computer readable storage medium, and these instructions make the computer, the programmable data processing apparatus, and/or other devices work in a specific manner, so that the computer readable medium storing the instructions includes a manufactured product, which includes instructions for implementing various aspects of the functions/actions specified in one or more blocks of the flowcharts and/or block diagrams.

The computer readable program instructions may be loaded onto a computer, other programmable data processing apparatus, or other devices, so that a series of operation steps are performed on the computer, other programmable data processing apparatus, or other devices to produce a computer implemented process, so that the instructions executed on the computer, other programmable data processing apparatus, or other devices implement the functions/actions specified in one or more blocks of the flowcharts and/or block diagrams.

The flowcharts and block diagrams in the drawings illustrate the possibly implemented architectures, functions, and operations of the system, the method, and the computer program product according to multiple implementations of the present disclosure. In this regard, each block in the flowchart or block diagram may represent a module, program segment, or part of an instruction, which includes one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a dedicated hardware-based system that performs specified functions or actions, or by a combination of dedicated hardware and computer instructions.

The implementations of the present disclosure have been described above, and the above description is illustrative, not exhaustive, and is not limited to the disclosed implementations. Without departing from the scope of the described implementations, many modifications and changes will be apparent to those of ordinary skill in the art. The selection of terms used herein is intended to best explain the principles of the implementations, practical applications, or improvements to the technologies in the market, or to enable other ordinary technicians in the technical field to understand the implementations disclosed herein.

## Claims

1. A method (400) of interaction, applied at an electronic device, the method comprising:
continuously capturing (410), using an image acquisition unit equipped on the electronic device, a plurality of images during the electronic device is in a first mode; and
outputting (420), in response to a visual interaction request of a user, response content to the user, wherein the response content is generated by a pre-trained model based on at least one image of the plurality of images.

2. The method (400) of claim 1, wherein,
the electronic device is equipped with an audio capturing unit, and the responding to the visual interaction request of the user comprises: in response to first speech content of the user received by the audio acquisition unit being determined to be associated with the visual interaction request of the user; and/or,
the electronic device is equipped with an audio playing unit, and the outputting response content to the user comprises: playing second speech content to the user through the audio playing unit, wherein, the second speech content is generated by the pre-trained model based on at least one image of the plurality of images.

3. The method (400) of claim 2, wherein the second speech content is generated through:
generating, in response to the first speech content being associated with the visual interaction request, response content for the visual interaction request based on the visual interaction request and the at least one of image the plurality of images using the pre-trained model, the response content being the second speech content or text content corresponding to the second speech content.

4. The method (400) of claim 2 or 3, wherein the electronic device is in wireless communication with a terminal device, the method further comprising:
transmitting the plurality of images from the electronic device to the terminal device before determining whether the first speech content is associated with the visual interaction request of the user, and optionally,
wherein the terminal device is further configured to:
transmit at least one of the plurality of images to the pre-trained model after the first speech content is determined to be associated with the visual interaction request of the user; and/or,
transmit the plurality of images from the electronic device to the pre-trained model to construct context information corresponding to the plurality of images.

5. The method (400) of claim 4, wherein the second speech content is further generated based on a part of the context information corresponding to the at least one image.

6. The method (400) of any one of claims 2 to 5, further comprising:
determining that the first speech content is associated with the visual interaction request of the user in response to determining that the first speech content comprises a predetermined keyword; and/or,
transmitting the first speech content to the pre-trained model to determine whether the first speech content is associated with the visual interaction request of the user by the pre-trained model.

7. The method of any preceding claim, wherein the at least one image is determined from the plurality of images based on a correlation between the visual interaction request and the plurality of images.

8. The method (400) of any preceding claim, wherein continuously capturing, using the image acquisition unit equipped on the electronic device, the plurality of images comprises:
determining a resolution associated with the first mode, and capturing at least part of the plurality of images based on the resolution; and/or,
determining a capturing interval associated with the first mode, and periodically capturing the plurality of images based on the capturing interval.

9. The method (400) of any preceding claim, wherein the first mode is enabled in response to an enable request of the user, and the enable request comprises: an enabling operation received via an interactive interface associated with the electronic device; or, a voice instruction; or, a physical operation instruction, and optionally,
wherein the electronic device is associated with a voice assistant application, and the method further comprises: receiving a first voice instruction from the user in a conversation with the voice assistant application; and enabling the first mode of the electronic device in response to receiving an end request of the conversation or no voice message being received in the conversation within a predetermined time period.

10. The method (400) of any preceding claim, wherein the electronic device comprises a plurality of image acquisition units, and continuously capturing, using the image acquisition unit equipped on the electronic device, the plurality of images comprises:
continuously capturing images alternately using a first image acquisition unit and a second image acquisition unit in the plurality of image acquisition units, and optionally,
continuously capturing, using the first image acquisition unit of the plurality of image acquisition units, a first set of images during a first round of conversation; and continuously capturing, using the second image acquisition unit of the plurality of image acquisition units, a second set of images during a second round of conversation after the first round of conversation ends, the second image acquisition unit being different from the first image acquisition unit; and/or, continuously capturing, using the first image acquisition unit of the plurality of image acquisition units images for a first duration, and continuously capturing, using the second image acquisition unit of the plurality of image acquisition units images for a second duration, the first duration and the second duration corresponding to a same time length or different time lengths.

11. The method (400) of any preceding claim, wherein the electronic device comprises a plurality of image acquisition units, and continuously capturing, using the image acquisition unit equipped on the electronic device, the plurality of images comprises:
capturing all of the plurality of images using a target image acquisition unit of the plurality of image acquisition units, the target image acquisition unit being determined based on configuration information associated with the first mode and/or a wearing state of the electronic device.

12. The method (400) of any preceding claim, further comprising:
exiting the first mode in response to a battery level of the electronic device being below a threshold; or,
the electronic device comprising a wearable device, exiting the first mode in response to a wearing state of the electronic device not satisfying a predetermined condition; or,
exiting the first mode in response to a second voice instruction received via the electronic device.

13. The method (400) of claim 2 or any claim dependent thereon, further comprising:
triggering display in an interactive interface associated with the electronic device: a first message corresponding to the first speech content; a second message corresponding to the second speech content; and one or more images of the plurality of images, and optionally,
wherein the one or more images comprise: the at least one image for generating the second speech content; and/or, a first captured image of the plurality of images.

14. An interaction method (500), applied at a terminal device, the method comprising:
obtaining (510), from an electronic device in wireless communication with the terminal device, a plurality of images, wherein the plurality of images is continuously captured using an image acquisition unit equipped on the electronic device during the electronic device is in a first mode;
obtaining (520), in response to a visual interaction request of a user, response content, wherein the response content is generated by a pre-trained model based on at least one image of the plurality of images; and
sending (530), to the electronic device, the response content to output, using the electronic device, the response content to the user.

15. An electronic device (1000), comprising:
at least one processing unit (1010); and
at least one memory (1020) coupled to the at least one processing unit (1010) and storing instructions executable by the at least one processing unit (1010), the instructions, when executed by the at least one processing unit (1010), causing the electronic device (1000) to perform the method of any of claims 1 to 14.
